# EUROPEAN PATENT APPLICATION

(11) **EP 4 484 080 A1**
(43) Date of publication of application: **01.01.2025**
(21) Application number: 23182799.9
(22) Date of filing: 30.06.2023
(51) Int. Cl.: B25J 13/08, B25J 9/16

(54) **METHOD FOR TRACKING A MOBILE ROBOT**

(71) Applicant: Baubot GmbH, 1100 Wien (AT)
(72) Inventor: MIETH, Gabriel, 1100 Wien (AT)
(74) Representative: SONN Patentanwälte GmbH & Co KG

(57) **Abstract**

Method for tracking a mobile robot (2), wherein the mobile robot (2) comprises a robot base (5) and a multi-axis robot arm (6) arranged on the robot base (5), wherein an optical marker is mounted on the robot arm (6), with the steps:
- providing a tacheometer (3), wherein the tacheometer (3) is configured to track the optical marker (4);
- moving the optical marker (4) along a first circular arc (34) by means of the robot arm (6);
- moving the optical marker along a second circular arc by means of the robot arm (6);
- tracking the optical marker (4) by means of the tacheometer (3) in at least three positions (35) along the first circular arc (34) and in at least three further positions (39) along the second circular arc (37) relative to the tacheometer (3); and
- determining a position and an orientation of the robot base (5) based on the tracked at least three positions (35) and the tracked at least three further positions (39) of the optical marker (4).

## Description

The disclosure concerns a method for tracking a mobile robot, a tracking system with a tacheometer and a mobile robot as well as a mobile robot, in particular a mobile construction robot, comprising:
- a robot base;
- a multi-axis robot arm arranged on the robot base, wherein the robot arm comprises a plurality of links connected by joints, and
- an optical marker mounted on the robot arm, the optical marker being arranged for tracking with a tacheometer.

Mobile robots are used to automate especially repetitive and physically demanding tasks, for example at construction sites. For example, a mobile construction robot may drill holes at predefined positions or mount anchors. Such mobile construction robots are configured to autonomously move around the construction site, locate the predefined positions at which a specific task is to be performed, and consequently perform the respective task. By means of such a robot, manpower can be deployed more efficiently and the construction can be sped up drastically.

Typically, such mobile robots comprise a base, a propulsion system for moving the robot, as well as a robot arm with an end effector. The robot arm needs to comprise multiple axis so that the robot is able to move the end effector in various positions and orientations with respect to the robot base. The kinematic chain of the robot arm typically comprises a rocker arm, which is pivotably connected to the base, and a boom arm, which is pivotably connected to the rocker arm. Once the construction robot is in the vicinity of a position, where a task is to be completed, the robot moves the robot arm so that by means of the end effector the respective task can be done.

It is crucial to determine the exact location of the mobile construction robot at the construction site for several reasons. First and foremost, precision is decisive with respect to construction projects. It is necessary to ensure that the location of, for example, the drilled holes are precisely at their intended location to avoid errors and costly delays. In addition, ensuring the exact location of the drilling can help to provide increased safety on the construction site. Accurate positioning of anchors can help to avoid collisions with other equipment or structures and can also help to prevent injuries to workers. Finally, knowing the exact location of the drilling is also necessary for documentation purposes, as it can provide a clear record of the work that has been completed and the progress of the project. Therefore, both efficiency and precision are decisive in this context.

Mobile robots are also used for other purposes than construction, where it is also essential to know the position of the robot. For example, mobile robots can be used for transportation of goods or cleaning purposes, for example.

Known solutions from the prior art to track construction robots, in particular mobile construction robots, can be categorized in two groups. Solutions relating to the first group comprise an active optical sensor disposed on a mobile robot in combination with stationary passive elements, such as markers or reflectors, for example at the construction site. In contrast, the second group comprises a passive optical element disposed at the mobile construction robot and a stationary active optical sensor, such as a total station, at the construction site.

A position-measuring system for measuring the position of a mobile machine tool relating to the first group is for example known from WO 2022 096 337 A1. A mobile machine tool is equipped with a position measuring system, which is configured to measure the position of the mobile machine tool with respect to (passive) markings at the construction site.

A similar method for specifying a position of an instrument head of a robot is known from WO 2021 058 569 A1. The instrument head comprises a distance measuring device with a number of distance measuring sensors. Based on measurements by means of the distance measuring sensors and a known geometry model of the construction site, the position of the instrument head is determined.

A disadvantage of these methods is that rather sensitive optical sensors need to be deployed at the robot. In case the robot is configured to perform heavy tasks such as drilling, the sensors may be affected by vibrations and contamination by dust. Especially the sensors of WO 2021 058 569 A1 are located directly at the instrument head, which in the context of drilling is subject to particularly severe vibration and dust contamination.

Examples for solutions relating to the second group are known from WO 2016 066 615 A2, CN 113 280 807 A and WO 2020 038 779 A1.

WO 2016 066 615 A2 shows a mobile robotic drilling apparatus for drilling ceilings and walls at a construction site. The apparatus comprises a robotic arm mounted to a substructure. A laser total station is used to measure the position of a reflector prism mounted on the robotic arm.

CN 113 280 807 A shows a mobile robot positioning device. A total station is provided, as well as a fixedly arranged rear-view prism and a station positioning prism. Furthermore, a front-view positioning prism is provided on the mobile robot. The total station determines the position of the front-view positioning prism in relation to the fixed rear-view prism, the station positioning prism and the position of the total station. The front-view positioning prism is mounted at the mobile robot. The system is rather complex, since in addition to the total station and the front-view positioning prism, two further stationary prisms are deployed.

Another mobile construction robot is known from WO 2020 038 779 A1. The mobile construction robot comprises a driving platform and a robotic arm with several arm segments that are interconnected by rotary joints as well as an end-effector. An optical marker is mounted to the end-effector. The end-effector can be moved by controlling the robotic arm. A laser total station is placed on the construction site to track the optical marker. The position of the optical marker relative to the optical tracker is measured in two positions of the end-effector with the optical tracker. The position of the end-effector relative to the driving platform in these two positions is measured by means of rotary sensors mounted on the robotic arm. The rotary sensors yield the joint angles of the rotary joints. These measurements are used to determine the position and the orientation of the driving platform. However, the measurement of the position of the end-effector relative to the driving platform is prone to a relatively large uncertainty, since individual uncertainties of the rotary sensors add up starting from the driving platform to the end-effector. This uncertainty propagates to the determination of the position and the orientation of the driving platform.

It is therefore an object of the invention to alleviate or eliminate at least some of the disadvantages of the prior art. In particular, it is an object of the invention to provide a simple and robust method for determining the position and the orientation of a mobile robot, in particular a mobile construction robot at a construction site, with increased precision and accuracy.

This object is solved by a method for tracking a mobile robot, in particular a mobile construction robot at a construction site, wherein the mobile robot comprises a robot base and a multi-axis robot arm arranged on the robot base, wherein an optical marker is mounted on the robot arm, with the steps:
- providing a tacheometer, in particular at the construction site, wherein the tacheometer is configured to track the optical marker;
- moving the optical marker along a first circular arc by means of the robot arm;
- moving the optical marker along a second circular arc by means of the robot arm;
- tracking the optical marker by means of the tacheometer in at least three positions along the first circular arc and in at least three further positions along the second circular arc relative to the tacheometer; and
- determining a position and an orientation of the robot base based on the tracked at least three positions and the tracked at least three further positions of the optical marker.

Furthermore, this object is solved by a mobile robot of the above-mentioned type, wherein the mobile robot is configured to move the optical marker along a first circular arc and a second circular arc, respectively.

Furthermore, this object is solved by a tracking system for tracking a mobile robot, in particular a mobile construction robot at a construction site, comprising:
- a tacheometer configured to track an optical marker; and
- a mobile robot of the above-mentioned type, wherein the mobile robot is configured to move the optical marker along a first circular arc and a second circular arc, respectively.

The mobile robot may be a mobile construction robot. The mobile construction robot as well as the tracking system may, for example, be deployed at a construction site for a building structure, which, for example, may be a building, a tunnel, a road, a bridge, a car park, a hospital, or any other infrastructure project where many, for example more several hundred, repetitive tasks such as drilling holes or mounting anchors are required.

The tracking system comprises a tacheometer, configured to track an optical marker. The tacheometer may be a laser total station. The tacheometer is placed at a site where the mobile robot is deployed, in particular at a position where the tacheometer has a broad overview of the site. The tacheometer may be configured to automatically track the optical marker. Tracking includes measuring a distance between the tacheometer and the optical marker, as well as measuring a polar angle and an azimuthal angle of a line of sight between the tacheometer and the optical marker with respect to a reference coordinate system. The optical marker may be tracked either in a stationary position or, alternatively, while moving. The tacheometer may comprise a source of electromagnetic radiation, in particular visible light. For example, the tacheometer may comprise a LED or a laser. The optical marker may be a reflector or a prism, for example. The optical marker may be a purely passive element. The optical marker may reflect at least a portion of electromagnetic radiation emitted by the tacheometer and incident on the optical marker to the tacheometer. The position of the tacheometer may be used to define a global reference coordinate system within the site. The position of the tacheometer with respect to the site, e.g., the construction site, is known. For example, the position of the tacheometer may be fixed and measured during or after providing the tacheometer.

The mobile robot, which is to be tracked, has a robot base, which may have a chassis for a propulsion system and a robot base body on top of the chassis. The robot base may be generally box-shaped. The robot base may, for example, house electronics, control equipment, pneumatic and/or hydraulic compressors. The robot base may have a top side, a lower side, a first lateral side, a second lateral side, a first end side and a second end side. A propulsion system is arranged on the lower side of the robot base, such that at least a part of the propulsion system is in contact with a surface, such as a ground, of for example the construction site in order to move the mobile robot. The propulsion system may, for example, comprise a motor, wheels and/or a continuous track. The top side of the robot base is opposite of the lower side of the robot base. The propulsion system may have a main axis of propulsion. The first lateral side and the second lateral side may extend essentially upwards and parallel to the main axis of propulsion, whereas the first end side and the second end side may be essentially orthogonal to the main axis of propulsion (i.e., the direction of movement going straight forward or backward). The mobile robot further comprises a multi-axis robot arm. The robot arm may comprise an end effector. The multi-axis robot arm may be arranged on the top side of the robot base, for example.

For the purpose of this disclosure, all directions, and positions, such as "vertical", "horizontal", "upper and lower region" are given with respect to the intended use of the mobile robot on a horizontal underground. Of course, the mobile robot may drive on an inclined surface. In this case, the directions and positions must be transferred accordingly.

The robot arm comprises a kinematic chain with multiple links connected via joints. The kinematic chain comprises a distal chain end and a proximal chain end with respect to the robot base. The proximal chain end is connected to the robot base, whereas the distal chain end may comprise an end effector. The end effector may, for example, comprise a holder for releasably mounting an anchor mounting tool and/or a drill bit for producing drilling holes at a construction site. Each joint of the kinematic chain may connect at least two links so that the connected links can pivot or rotate relative to each. The links therefore can be moved with respect to the robot base.

The mobile robot comprises means to determine the positions of the axis of the robot arm, i.e., the (angular) positions of the joints. In particular, the mobile robot may comprise rotary sensors to determine the angular positions of the joints. Since the geometry of the links and joints is known, the (angular) positions of the joints are sufficient to calculate the position and orientation of each of the links of the robot arm with respect to the robot base.

The mobile robot is configured to move the optical marker along a first circular arc and a second circular arc, respectively. The position of the robot base with respect to the tacheometer remains constant while the optical marker is moved along the first circular arc and the second circular arc. In order to track the mobile robot, the tacheometer is provided at the site, where the mobile robot is deployed. The optical marker is moved along the first circular arc by means of the robot arm. By moving the optical marker, the relative position of the optical marker with respect to the robot base and with respect to the tacheometer changes. However, the relative position of the robot base with respect to the tacheometer remains constant during the movement of the optical marker. The optical marker is tracked by means of the tacheometer in at least three positions along the first circular arc relative to the tacheometer. For example, the optical marker may be tracked in at least 5 positions, preferably at least 10 positions, more preferably at least 20 positions, more preferably at least 100 positions, along the first circular arc.

The optical marker is consequently moved along a second circular arc by means of the robot arm. The second circular arc is different from the first circular arc. The optical marker is tracked in at least three further positions along the second circular arc relative to the tacheometer. For example, the optical marker may be tracked in at least 5 positions, preferably at least 10 positions, more preferably at least 20 positions, more preferably at least 100 positions, along the second circular arc.

The first circular arc is an arc of a first circle and the second circular arc is an arc of a second circle. The first circular arc and the second circular arc may have a central angle α selected from a range from 10° to 360°, for example. In particular the first circular arc and the second circular arc may have a central angle between 10° and 360°. Preferably, the first circular arc and the second circular arc may each have a central angle from 45° to at least 150°. The first circular arc and the second circular arc may have a radius r ranging from 10 cm to 4 m, preferably from 50 cm to 2 m. An arc length L of the first circular arc or the second circular arc may be calculated with the following formula: L = r α /360°.

Based on the at least three positions of the optical marker tracked along the first circular arc and the at least three further positions of the optical marker tracked along the second circular arc, a position and an orientation of the robot base is determined. There is a direct line of sight between the tacheometer and the optical marker in the tracked positions, i.e., the at least three positions and the at least three further positions. The tacheometer determines a distance d between the optical marker and the tacheometer as well as the polar angle ϕ and the azimuthal angle θ between the optical tracker and the tacheometer with respect to the global coordinate system for each tracked position. The tacheometer may be in the origin of the global coordinate system.

For each of the at least three positions and the at least three further positions, the distance d, as well as the polar angle ϕ, and the azimuthal angle θ is measured by means of the tacheometer. In addition, the positions of the axes, i.e., the positions of the relevant joints in between the robot base and optical marker are known. Also, the (fixed) position of the optical marker with respect the robot arm is known. Additionally, it is known that the at least three positions lie on the same first circle, which has a fixed center and radius. Also, the at least three further positions lie on the same second circle, which has a fixed center and radius. All this information is used to determine the position and orientation of the robot base with respect to the tacheometer.

The position of the robot base with respect to the tacheometer may relate to the coordinates of a reference point of the robot base. For example, a center of gravity of the robot base may be the reference point. Alternatively, a point at a surface of the robot base may be the reference point. The orientation of the robot base may relate to an orientation of the robot base within the global coordinate system. For example, the mobile robot may comprise a main axis of propulsion (i.e., the direction of movement going straight forward or backward). There may be an orientation vector parallel to the main axis of propulsion, which starts at the second end side of the robot base and ends at the first end side of the robot base, i.e., the orientation vector points in forward direction with respect to the propulsion. The orientation of the orientation vector within the global coordinate system may relate to the orientation of the robot base. The orientation of the robot base may be defined in various ways, it is however crucial to have a relationship between local coordinates of the robot arm, i.e., the positions of the joints, and the global coordinate system. In general, the robot base has six degrees of freedom in the three-dimensional space. Namely three translational degrees of freedom and three rotational degrees of freedom. The translational degrees of freedom relate to the position of the mobile robot, whereas the rotational degrees of freedom relate to the orientation of the mobile robot. The position and orientation of the robot base are determined relative to the position of the tacheometer in the global coordinate system. The coordinates of the robot base can be expressed in terms of the global coordinate system. Consequently, a movement of the robot arm relative to the robot base can be measured internally by the robot, whereas due to the determined position and orientation of the robot base, the movement of the arm is known in terms of the global coordinate system. Also, global coordinates can be expressed in terms of the local coordinate system of the mobile robot.

The accuracy and precision of the overall determined position and orientation of the robot base is limited by a number of factors. The tracked positions of the marker each have a certain measurement uncertainty, which is mostly related to the properties of the tacheometer and the physical properties of the reflective prism itself. In addition, the relative position of the optical marker with respect to the robot base is taken into account in order to determine the position and the orientation of the robot base based on the tracked positions. Since the geometry of the links and joints of the robot arm and the origin of the robot arm with respect to the robot base is known, the (angular) positions of the joints are sufficient to calculate the position and orientation of each of the links of the robot arm (and consequently the optical marker) with respect to the robot base. However, also the relative position of the optical marker with respect to the robot base has an uncertainty, which contributes to the overall uncertainty of the determined position and orientation of the robot base. This overall uncertainty can be reduced by moving the optical marker along the first circular arc and along the second circular arc, as in this case there is a correlation between the tracked at least three positions along the first circular arc and the tracked at least three further positions along the second circular arc respectively. This is due to the additional information that the at least three positions lie on the same first circle, which has a fixed center and radius. The radius is already known based on the geometry of the robot arm and the (also known) relative position of the optical marker with respect to the robot arm. The tracked at least three positions can therefore be used to calculate the position of the center of first circle and an orientation of the first circular arc with respect to the tacheometer with a relatively low uncertainty. Similarly, the at least three further positions may be used to calculate the relative position of the center of the second circle and the orientation of the first circular arc with respect to the tacheometer. The more positions are tracked along the first and the second circular arc, the lower the overall uncertainty.

The relative position of the center of the first circle with respect to the second circle is known based on the geometry of the mobile robot. The origin of the first circle and the center of the second circle may coincide. Overall, the uncertainty of the determined position and orientation of the robot base with respect to the tacheometer can be decreased by the method for tracking the mobile robot according to the invention. This decreased uncertainty is due to the correlation of the tracked positions of the optical marker by utilizing the circular arcs.

The tracking system may comprise a processor, configured to determine the position and the orientation of the robot base based on the tracked at least three positions and the tracked at least three further positions. The processor may be within the mobile robot. Alternatively, the processor may be within the tacheometer. Optionally, the processor may be part of an external computer. The processor may be connected to both the tacheometer and the mobile robot, in particular to the rotary sensors, for example, via GSM, and may be configured to receive data and to send data. The processor may be configured to control the tacheometer and/or the mobile robot. The processor may have access to a computer-readable medium, such as an electronic storage.

The computer readable medium may store an electronic copy of a construction plan of the construction site, wherein the construction plan may indicate the positions at which the mobile construction robot should perform a task. The processor may be configured to control the movement of the mobile construction robot accordingly.

Optionally, the first circular arc is located in a first plane and the second circular arc is located in a second plane, wherein the first plane is transverse, in particular perpendicular, to the second plane. The relative orientation of the first plane with respect to the second plane is known based on the known information on the angular positions of the joints, in particular the joints proximal of the optical marker. In case the first plane is perpendicular to the second plane, a third plane can be inferred perpendicular to the first plane and the second plane to establish a full coordinate system. In addition, the distance between the at least three positions and the at least three further positions may be particularly large, which also reduces the overall measurement uncertainty. Furthermore, the orientation of the first plane and the second plane with respect to the tacheometer are relevant for the overall uncertainty.

The multi-axis robot arm may comprise a plurality of links connected by joints, wherein preferably exactly one of the joints is actuated for moving the optical marker along the first circular arc and exactly one of the joints is actuated for moving the optical marker along the second circular arc. By actuating exactly one of the joints for moving the optical marker along the first circular arc and also actuating only one of the joints for moving the optical marker along the second circular arc, the remaining joints remain at a constant angle during the movement. This further decreases the overall uncertainty.

Optionally, the robot arm comprises at least a first link and a second link, wherein the first link is connected to the robot base via a first joint, wherein the second link is connected to the first link via a second joint, and wherein the following steps are performed for tracking the optical marker:
Actuating the second joint for moving the optical marker along the first circular arc,
Actuating the first joint for rotating the second joint such that the first plane is transverse, in particular perpendicular, to the second plane, and
Actuating the second joint for moving the optical marker along the second circular arc.

By actuating only, the first and the second joint, i.e., the joints closest to the robot base, uncertainties due to angular positions of remaining joints (i.e., joints distal of the second joint and the second link) are less important for the overall uncertainty of the position and orientation of the robot base. The optical marker may be mounted on the second link. In this case the uncertainties due to angular positions of remaining joints are irrelevant for the overall uncertainty.

Optionally, the robot arm comprises at least a first link and a second link, wherein the first link is connected to the robot base via a first joint, wherein the second link is connected to the first link via a second joint, and wherein the following steps are performed for tracking the optical marker:
Actuating the second joint for moving the optical marker along the first circular arc, and
Actuating the first joint for moving the optical marker along the second circular arc.

The relationship between the first joint and the second joint are known. For example, the first joint may be configured as a rotating table and may be configured to rotate the first link around a first axis, for example a vertical axis. The second joint may be configured to pivot the second link around a second axis, for example a horizontal axis. The horizontal axis is perpendicular to the vertical axis. In this case, the first plane is necessarily perpendicular to the second plane. This further reduces the overall uncertainty.

Optionally, one of the links is configured as a rocker arm, wherein the optical marker is mounted on the rocker arm. The optical marker may be mounted on the rocker arm of the robot arm for tracking with the tacheometer. The optical marker may be immovably connected to the rocker arm such that the optical marker follows the movement of the rocker arm, i.e., the relative location of the optical marker with respect to the rocker arm is fixed regardless of the relative position of the rocker arm with respect to the robot base.

The rocker arm may be the first link of the kinematic chain (starting from the proximal chain end) that can be pivoted about a horizontal axis with respect to the robot base. The rocker arm is elongated in a direction transverse to the axis about which the rocker arm is pivotable with respect to the robot base. The rocker arm may be the first link of the kinematic chain, which can be moved around an axis that does not coincide with a main axis of extension of the respective link. In particular, the rocker arm may be the first link of the kinematic chain, which is pivotable around an axis that is essentially orthogonal to the main axis of extension of the respective link. Therefore, the rocker arm is the first link, which may travel upwards or downwards with respect to the robot base. The robot arm may comprise six axes, in order to be able to move the end effector in various positions with various orientations with respect to the robot base. The link following the rocker arm in proximal direction of the robot arm (with respect to the robot base) may be configured as a boom arm. The boom arm may be pivotable with respect to the rocker arm. The end effector may be connected to the boom arm. An exemplary robot arm with a rocker arm and a boom arm is shown in US 9 950 423 B2.

The rocker arm has fewer degrees of freedom as compared to further links distal of the rocker arm. Therefore, the position and orientation of the rocker arm with respect to the boom arm is known with greater certainty, i.e., less uncertainty, than the position and orientation of further links of the robot arm distal of the rocker arm. The rocker arm is also the first link of the robot arm proximal of the robot base than can be moved upwards or downwards to lift the end effector. For example, the rocker arm may comprise a length of 100 mm to 4000 mm, preferably 500 mm to 2000 mm, and/or may be pivotable by an angle in a range of 10° to 360°.

In order to determine the position and orientation of the robot base with high accuracy and precision, the position of the optical marker with respect to the robot base needs to be known with as little uncertainty as possible. Arranging the optical marker at the rocker arm allows to determine the position of the optical marker with particularly low uncertainty. Only the uncertainties of joint positions of those joints in between the rocker arm and the robot base are relevant for the uncertainty of position of the optical marker.

Optionally, the multi-axis robot arm comprises at least a first link and a second link, wherein the first link is connected to the robot base via a first joint, wherein the second link is connected to the first link via a second joint, wherein the second link is configured as the rocker arm.

Optionally the first joint provides a first degree of freedom of movement, wherein the second joint provides a second degree of freedom of movement, such that the movement of the rocker arm with respect to the robot base has the first degree of freedom and the second degree of freedom. This way, the optical marker mounted on the rocker arm can be moved along the first circular arc and along the second circular arc, wherein the first plane is transverse, in particular perpendicular, to the second plane. In order to realize these movements, the rocker arm needs at least two degrees of freedom. Further degrees of freedom may lead to an increased uncertainty. Therefore, two degrees of freedom leads to an especially low overall uncertainty. In contrast, the end effector may have six degrees of freedom with respect to the robot base.

For example, the rocker arm may comprise a distal end and a proximal end relative to the robot base, wherein the optical marker is arranged at the distal end of the rocker arm. Due to the length of the rocker arm, the distal end of the rocker arm has a greater travel than the proximal end when the rocker arm is pivoted with respect to the robot base. Therefore, greater distances between at least three positions and the at least three further positions can be achieved respectively. In other words, the radius of the first circle and the second circle is relatively large. This leads to a lower uncertainty of the determined position and orientation of the robot base. In addition, the distal end of the rocker arm is in typical use among the most elevated elements of the mobile robot. Therefore, there may be a direct line of sight between the optical marker and the tacheometer mostly independent from the orientation of the robot base with respect to the tacheometer.

The accuracy and precision are also influenced by the distances between the tracked positions of the optical marker. The tacheometer yields measurements with uncertainties Δd for the measured distances, Δϕ for the measured polar angles and Δθ for the measured azimuthal angles. Mainly due to these uncertainties, a greater distance between the tracked positions is beneficial, so that the relative uncertainty of the determined position of the robot base is low. Arranging the optical marker at the rocker arm is also in this aspect beneficial, as it enables the mobile robot to move the optical tracker significantly with respect to the robot base.

Optionally, the optical marker is mounted on the rocker arm via an elongated member. The elongated member is immovably connected to the rocker arm, i.e., the relative location of the rocker arm with respect to the elongated member is fixed. The elongated member may improve the visibility of the optical marker. For example, the elongated member may be arranged such that the line of sight between the tacheometer and the optical marker is unobstructed by the rocker arm in most cases.

The elongated member may comprise a proximal end and a distal end with respect to the robot base, wherein the optical marker is arranged at the distal end of the elongated member. Due to the length of the elongated member, the distal end of the elongated member has a greater travel than the proximal end when the rocker arm (and therefore also the elongated member) is pivoted with respect to the robot base. This leads to a lower uncertainty of the determined position and orientation of the robot base.

For example, the elongated member may be arranged essentially parallel to the rocker arm. The elongated member comprises a main axis and the rocker arm comprises a main axis. The main axis of the elongated member may be essentially parallel to the main axis of the rocker arm.

The distal end of the elongated member may extend beyond the distal end of the rocker arm. The rocker arm comprises a main axis, wherein the elongated member is arranged such that the distal end of the elongated member is further distal from the proximal end of the rocker arm than the distal end of the rocker arm is with respect to the main axis of the rocker arm. The distal end of the elongated member is in this case in typical use among the most elevated elements of the mobile robot. Therefore, there may be a direct line of sight between the optical marker and the tacheometer mostly independent from the orientation of the robot base with respect to the tacheometer. Specifically, the line of sight is not or at least less obstructed by the rocker arm in this arrangement.

Optionally, the elongated member may comprise a main part and an end part, wherein the end part is connected to the main part via an adjustable swivel joint, wherein the optical marker is arranged on the end part. The adjustable swivel joint may be used to adjust an angle and/or a relative position of the optical marker with respect to the main part. The adjustable swivel joint may be used to improve the visibility of the optical marker depending on the tasks and/or the environment of the mobile robot. The adjustable swivel joint is not manipulated in normal use of the mobile robot, e.g., while the mobile robot performs tasks. The adjustable swivel joint may be adjusted manually, for example, before the mobile robot is deployed. The adjustable swivel joint may comprise a fastener to fix the location of the end part with respect to the main part. The fastener is in a fixed position in normal use of the mobile robot.

By way of example, the disclosure is further explained with respect to some selected embodiments shown in the drawings for purposes of illustration. However, these embodiments shall not be considered limiting for the disclosure.
Fig. 1 shows a schematic illustration of a tracking system for tracking a mobile construction robot with a tacheometer and a mobile construction robot.
Fig. 2 shows a robot arm with a rocker arm and an optical marker attached to the rocker arm.
Fig. 3 shows the tracking system of fig. 1 with a schematically indicated first circular arc in a first plane
Fig. 4 shows the tracking system of figs. 1 and 3 with a schematically indicated second circular arc in a second plane.

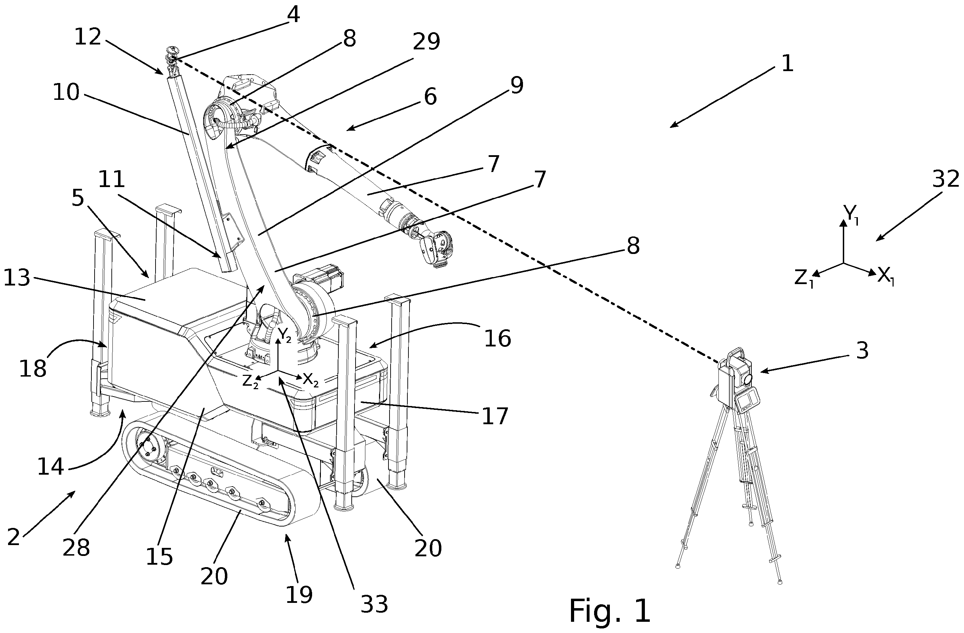

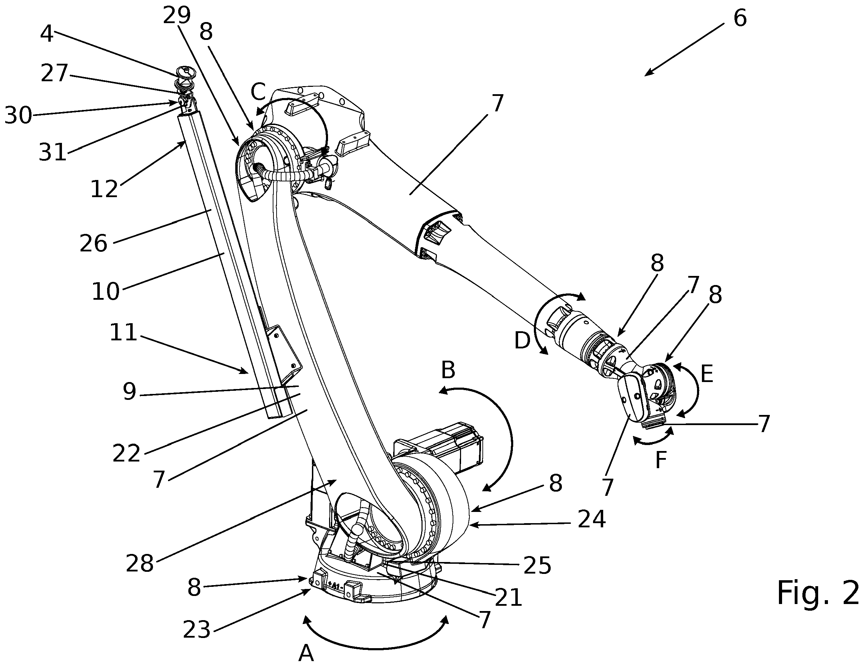

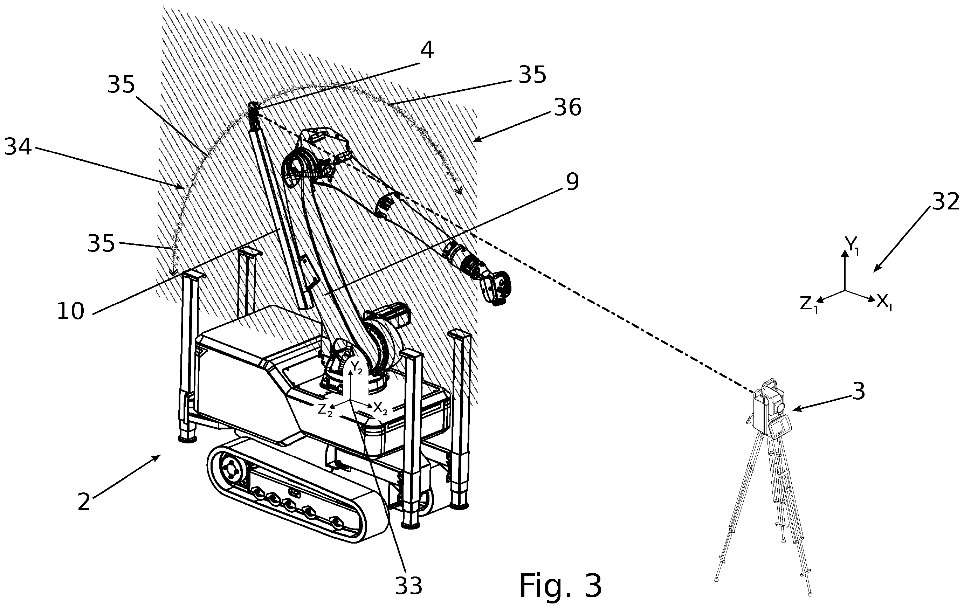

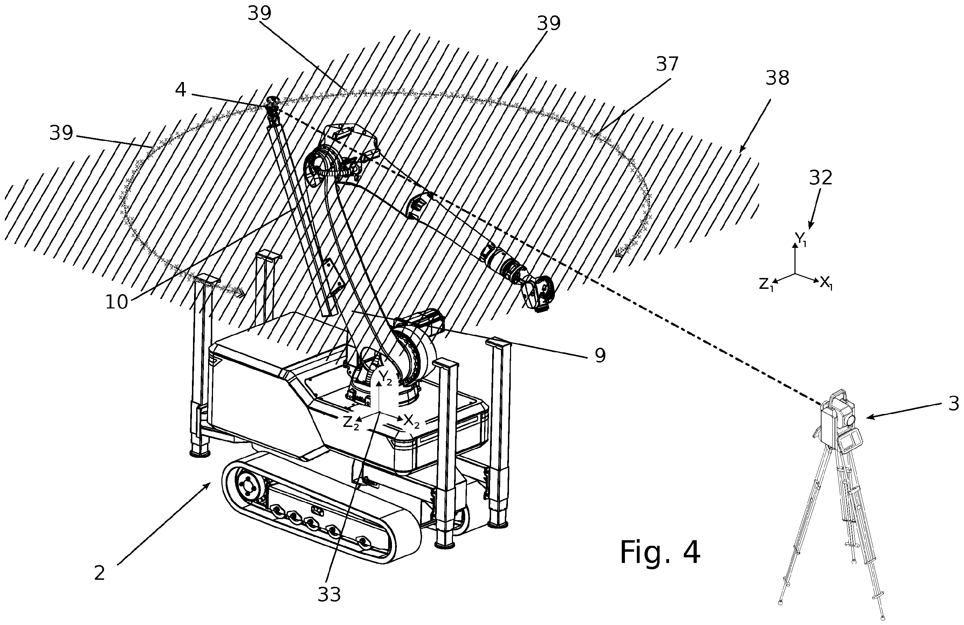

Fig. 1 shows a tracking system 1 for tracking a mobile robot 2. The tracking system comprises a tacheometer 3, in this case a laser total station, configured to track an optical marker 4. Furthermore, the tracking system 1 comprises the mobile robot 2, which is in this example configured as a mobile construction robot. The mobile robot 2 comprises a robot base 5 and a multi-axis robot arm 6 mounted on the robot base 5. The robot arm 6 comprises a plurality of links 7 connected by joints 8 (see fig. 2 for details). One of the links 7 is configured as a rocker arm 9. The optical marker 4 is mounted on the robot arm 6. In this exemplary embodiment, the optical marker 4 is mounted on the rocker arm 9 if the robot arm 6 via an elongated member 10. Alternatively, the optical marker may be mounted on a different link 7 of the robot arm 6 (with or without the elongated member 10). The mobile robot 2 is configured to move the optical marker 4 along a first circular arc 34 (see fig. 3) and a second circular arc 37 (see fig. 4), respectively.

The optical marker 4 is arranged for tracking with the tacheometer 3.

The optical marker is mounted on the rocker arm via an elongated member 10. The elongated member 10 comprises a proximal end 11 and a distal end 12 with respect to the robot base 5, wherein the optical marker 4 is arranged at the distal end 12 of the elongated member 10. The elongated member 10 is arranged essentially parallel to the rocker arm 9. The elongated member 10 has a main axis of extension and the rocker arm 9 has a main axis of extension, which axis are essentially parallel to each other.

The rocker arm 9 comprises a proximal end 28 and a distal end 29 relative to the robot base 5. The distal end of the elongated member 10 extends beyond the distal end 29 of the rocker arm 9.

The elongated member 10 is arranged such that the distal end 12 of the elongated member 10 is further distant from the proximal end 28 of the rocker arm 9 than the distal end 29 of the rocker arm 9 is with respect to the main axis of the rocker arm 9. The distal end 12 of the elongated member 10 is in this case in typical use among the most elevated elements of the mobile robot 2, as can also be seen in fig. 1. There is a direct line of sight between the tacheometer 3 and the optical marker 4.

The method for tracking the mobile robot 2 at the construction site, comprises the steps:
- providing the tacheometer 3, in this example at a construction site, wherein the tacheometer 3 is configured to track the optical marker 4;
- moving the optical marker 4 along a first circular arc 34 by means of the robot arm 6;
- moving the optical marker along a second circular 37 (see fig. 4) arc by means of the robot arm 6;
- tracking the optical marker 4 by means of the tacheometer 3 in at least three positions 35 along the first circular arc 34 (see fig. 3) and in at least three further positions 39 along the second circular arc 37 (see fig. 4) relative to the tacheometer 3; and
- determining a position and an orientation of the robot base 5 based on the tracked at least three positions 35 and the tracked at least three further positions 39 of the optical marker 4.

The robot base 5 of the mobile construction robot 2 has a top side 13, a lower side 14 opposite of the top side 13, a first lateral side 15 and a second lateral side 16, a first end side 17, here the front end, and a second end side 18, here the rear end. On the lower side 14 of the robot base 5 a propulsion system 19 is arranged for moving the mobile construction robot 2 on a surface of the construction site. In this example, the propulsion system 19 includes two continuous tracks 20. However, the propulsion system 19 may alternatively comprise wheels (not shown). The multi-axis robot arm 6 is arranged on the top side 13 of the robot base 5. Alternatively, the robot arm 6 may be arranged adjacent to the first end side 17, for example.

For example, in order to drill holes at the construction site, the robot arm 6 may be equipped with an end effector (not shown) configured to drill holes. The robot arm 6 is shown in fig. 2 in greater detail.

The tacheometer 3 is in the origin of a global coordinate system 32 with local (cartesian) coordinates X₁, Y₁, and Z₁. The mobile robot 2 additionally uses a local coordinate system 33 with local (cartesian) coordinates X₂, Y₂, and Z₂. The tracking system is used to find the position and orientation of the robot base 5, in other words a relation of the local coordinate system 33 to the global coordinate system 32.

Fig. 2 shows the robot arm 6 of fig. 1 in greater detail. The robot arm 6 comprises six links 7 connected by joints 8. The joints 8 enable a movement of two connected links 7 relative to each other. The possible movements of the links 7 relative to each other are indicated by "A", "B", "C", "D", "E" and "F". The robot arm 6 comprises a first link 21 and a second link 22, wherein the first link 21 is connected to the robot base 5 (see fig. 1) via a first joint 23, wherein the second link 22 is connected to the first link 21 via a second joint 24. The second link 22 is configured as the rocker arm 9. The first link 21 can be connected to the robot base 5, in particular to a chassis or to the top side 13 of the robot base 5. The first link 21 is configured as a rotating table 25. The rotating table 25 can rotate as indicated by "A" around a vertical first axis (not indicated). The rocker arm 9 is pivotably connected to the rotating table 25 and can pivot with respect to the rotating table 25 as indicated by B about a horizontal second axis (not indicated). The first axis and the second axis are essentially perpendicular to one another.

The rocker arm 9 is elongated compared to the rotating table 25. The first axis of rotation of the first link 21, i.e., the rotating table 25, essentially coincides with the main extension axis of the first link 21. In contrast, the second axis is essentially perpendicular to a main extension axis of the rocker arm 9.

The optical marker 4 is mounted on the rocker arm 9 via the elongated member 10. Alternatively, the optical marker may be mounted directly on the rocker arm 9. The elongated member 10 comprises a main part 26 and an end part 27, wherein the end part 27 is connected to the main part 26 via an adjustable swivel joint 30. The optical marker 4 is arranged on the end part 27. The adjustable swivel joint 30 can be used to adjust an angle and/or a relative position of the optical marker 4 with respect to the main part 26. The adjustable swivel joint 30 comprises a fastener 31 to fix the location of the end part 27 with respect to the main part 26. The fastener 31 is in a fixed position in normal use of the mobile robot 2.

When the rocker arm 9 is pivoted around the second axis by means of the second joint 24 as indicated by "B", the travel of the optical marker 4 is relatively high compared to other parts of the rocker arm 9, in particular compared to the proximal end 28 of the rocker arm 9, for example.

The first joint 23 provides a first degree of freedom of movement (indicated by "A"), wherein the second joint 24 provides a second degree of freedom of movement (indicated by "B"), such that the movement of the rocker arm 9 with respect to the robot base 5 has the first degree of freedom ("A") and the second degree of freedom ("B").

Fig. 3 shows the tracking system of fig. 1 with a schematically indicated first circular arc 34 in a first plane 36.

The first circular arc 34 is located in a first plane 36. In order to move the optical marker along the first circular arc 34, the rocker arm 9 with the elongated member 10 and the attached optical marker 4 is pivoted with respect to the rotating table 25 as indicated by "B" (see fig. 2) about a horizontal second axis. The first plane 36 is in this example identical with a X₂-Y₂ plane of the local coordinate system 33. The second circular arc 37 (see fig. 4) is located in a second plane 38 (see fig. 4), wherein the first plane 36 is transverse, in this example perpendicular, to the second plane 38.

The multi-axis robot arm 6 comprises a plurality of links 7 connected by joints 8, wherein exactly one of the joints 8 is actuated for moving the optical marker along the first circular arc and exactly one of the joints 8 is actuated for moving the optical marker 4 along the second circular arc 37. In this example, the second joint 24 is actuated to move the optical marker along the first circular arc 34, while all remaining joints 8 (i.e., all joints other than the second joint 24) remain at a constant angular position. In this exemplary embodiment, the position of the optical marker 4 with respect to the robot base 5 depends only on the angular position of the first joint 23 and the second joint 24, which provide a first degree of freedom and a second degree of freedom to the rocker arm 9 and therefore to the optical marker 4.

The multi-axis robot arm 6 comprises the first link 21 and the second link 22, wherein the first link 21 is connected to the robot base 5 via the first joint 23, wherein the second link 22 is connected to the first link 21 via the second joint 24. In this example, the following steps are performed for tracking the optical marker 4:
Actuating the second joint 24 for moving the optical marker 4 along the first circular arc 34 (as can be seen in fig. 3), and
Actuating the first joint 23 for moving the optical marker 4 along the second circular arc 37 (as can be seen in fig. 4).

The first plane 36 is in this exemplary embodiment perpendicular to the second plane 38 since the first vertical axis is perpendicular to the second horizontal axis. This (known) relationship further reduces the overall uncertainty.

Fig. 4 shows the tracking system of fig. 3 with a schematically indicated second circular arc 37 in a second plane 38. In order to move the optical marker 4 along the second circular arc 37, the rocker arm 9 with the elongated member 10 and the attached optical marker 4 is rotated by means of the rotating table 25 as indicated by "A" in fig. 2 about the vertical first axis. The second plane 38 is in this example identical with a X₂-Z₂ plane of the local coordinate system 33 and perpendicular to the first plane 36. The optical marker 4 is tracked in at least three further positions 39 along the second circular arc 37. The at least three further positions 39 (in this example more than 100 further positions) are indicated by markers "x". Not all markers "x" lie exactly on the second arc 27 but are schematically shown to have a small positional deviation. This deviation schematically indicates the measurement uncertainty of the tacheometer 3 with respect to a single measurement of the position of the optical marker 4. Overall, the second circular arc 37 tracked with a high accuracy and precision due to the number of tracked positions (leading to a statistical improvement of the uncertainty) and the further information that the tracked further positions 39 are located on the same second circular arc 37 (leading to a correlation of the further positions 39 which also improves the uncertainty). The same applies mutatis mutandis to the at least three positions 35 along the first circular arc 34 (see fig. 3).

Whether the optical marker 4 is first actuated along the first circular arc and secondly along the second circular arc 37 or vice versa is not relevant for the overall uncertainty.

## Claims

1. Method for tracking a mobile robot (2), in particular a mobile construction robot at a construction site, wherein the mobile robot (2) comprises a robot base (5) and a multi-axis robot arm (6) arranged on the robot base (5), wherein an optical marker is mounted on the robot arm (6), with the steps:
- providing a tacheometer (3), in particular at the construction site, wherein the tacheometer (3) is configured to track the optical marker (4);
- moving the optical marker (4) along a first circular arc (34) by means of the robot arm (6);
- moving the optical marker (4) along a second circular arc (37) by means of the robot arm (6);
- tracking the optical marker (4) by means of the tacheometer (3) in at least three positions (35) along the first circular arc (34) and in at least three further positions (39) along the second circular arc (37) relative to the tacheometer (3); and
- determining a position and an orientation of the robot base (5) based on the tracked at least three positions (35) and the tracked at least three further positions (39) of the optical marker (4).

2. Method for tracking a mobile robot according to claim 1, **characterized in that** the first circular arc (34) is located in a first plane (36) and the second circular arc (37) is located in a second plane (38), wherein the first plane (36) is transverse, in particular perpendicular, to the second plane (38).

3. Method for tracking a mobile robot according to anyone of the previous claims, **characterized in that** the multi-axis robot arm (9) comprises a plurality of links (7) connected by joints (8), wherein exactly one of the joints (8) is actuated for moving the optical marker (4) along the first circular arc (34) and exactly one of the joints (8) is actuated for moving the optical marker (4) along the second circular arc (37).

4. Method for tracking a mobile robot according to claim 3, **characterized in that** the multi-axis robot arm (6) comprises at least a first link (21) and a second link (22), wherein the first link (21) is connected to the robot base (5) via a first joint (23), wherein the second link (22) is connected to the first link (21) via a second joint (24), and wherein the following steps are performed for tracking the optical marker (4):
Actuating the second joint (24) for moving the optical marker (4) along the first circular arc (34),
Actuating the first joint (23) for rotating the second joint (24) such that the first plane (36) is transverse, in particular perpendicular, to the second plane (38), and
Actuating the second joint (24) for moving the optical marker (4) along the second circular arc (37).

5. Method for tracking a mobile robot according to claim 3, **characterized in that** the multi-axis robot arm (6) comprises at least a first link (21) and a second link (22), wherein the first link (21) is connected to the robot base (5) via a first joint (23), wherein the second link (22) is connected to the first link (21) via a second joint (24), and wherein the following steps are performed for tracking the optical marker (4):
Actuating the second joint (24) for moving the optical marker (4) along the first circular arc (34), and
Actuating the first joint (23) for moving the optical marker (4) along the second circular arc (37).

6. A mobile robot (2), in particular a mobile construction robot, comprising:
- a robot base (5);
- a multi-axis robot arm (6) arranged on the robot base (5), wherein the robot arm (6) comprises a plurality of links (7) connected by joints (8), and
- an optical marker (4) mounted on the robot arm (6), the optical marker (4) being arranged for tracking with a tacheometer (3),
**characterized in that**
the mobile robot (2) is configured to move the optical marker (4) along a first circular arc (34) and a second circular arc (37), respectively.

7. Tracking system (1) for tracking a mobile robot (2), in particular a mobile construction robot at a construction site, comprising:
- a tacheometer (3) configured to track an optical marker (4); and
- a mobile robot (2) according to claim 6.

8. Tracking system according to claim 7, **characterized in that** one of the links (7) is configured as a rocker arm (9), wherein the optical marker (4) is mounted on the rocker arm (9).

9. Tracking system (1) according to claim 8, **characterized in that** the multi-axis robot arm (6) comprises at least a first link (21) and a second link (22), wherein the first link (21) is connected to the robot base (5) via a first joint (23), wherein the second link (22) is connected to the first link (21) via a second joint (24), wherein the second link (22) is configured as the rocker arm (9).

10. Tracking system (1) according to claim 9, **characterized in that** the first joint (23) provides a first degree of freedom of movement, wherein the second joint (24) provides a second degree of freedom of movement, such that the movement of the rocker arm (9) with respect to the robot base (5) has the first degree of freedom and the second degree of freedom.

11. Tracking system (1) according to anyone of claims 8 to 10, **characterized in that** the rocker arm (9) comprises a distal end (29) and a proximal end (28) relative to the robot base (5), wherein the optical marker (4) is arranged at the distal end (29) of the rocker arm (9).

12. Tracking system according to anyone of claims 8 to 11, **characterized in that** the optical marker (4) is mounted on the rocker arm (9) via an elongated member (10).

13. Tracking system according to claim 12, **characterized in that** the elongated member (10) comprises a proximal end (11) and a distal end (12) with respect to the robot base (5), wherein the optical marker (4) is arranged at the distal end (12) of the elongated member (10).

14. Tracking system according to claim 13, **characterized in that** the distal end (12) of the elongated member (10) extends beyond the distal end (29) of the rocker arm (9).

15. Tracking system according to anyone of claims 12 to 14, **characterized in that** the elongated member (10) comprises a main part (26) and an end part (27), wherein the end part (27) is connected to the main part (26) via an adjustable swivel joint (30), wherein the optical marker (30) is arranged on the end part (27).
